# EUROPÄISCHE PATENTSCHRIFT

(11) **EP 3 815 822 B1**
(45) Veröffentlichungstag und Bekanntmachung des Hinweises auf die Patenterteilung: **15.07.2026**
(21) Anmeldenummer: 20197141.3
(22) Anmeldetag: 21.09.2020
(51) Int. Cl.: B23B 31/02, B23B 31/10, B23B 31/117

(54) **HYDRODEHNSPANNFUTTER**
HYDRAULIC EXPANSION CHUCK
MANDRIN HYDRAULIQUE

(30) Priorität: 31.10.2019 DE 102019216826
(43) Veröffentlichungstag der Anmeldung: 05.05.2021
(73) Patentinhaber: Gühring KG, 72458 Albstadt (DE)
(72) Erfinder: Gruber, Jochen, 72514 Inzigkofen (DE)
(74) Vertreter: Winter, Brandl - Partnerschaft mbB

(56) Entgegenhaltungen:
- WO-A1-2017/093280
- DE-A1- 102010 008 872
- DE-A1- 102017 107 488

## Beschreibung

Die Erfindung betrifft ein Hydrodehnspannfutter gemäß dem Oberbegriff des Anspruchs 1.

Derartige Hydrodehnspannfutter sind beispielsweise aus der WO 2017/093280 A1, DE 102012215036 A1, DE 10312743 A, DE 102012110392 B4 oder WO 2015/166062 A1 bekannt und haben einen sich entlang einer Dreh- oder Längsmittelachse erstreckenden Grundkörper, der sich funktional in einen Spannteil zum Aufnehmen und Spannen eines Schaftwerkzeugs und einen Schaftteil zum direkten oder indirekten Ankuppeln des Hydrodehnspannfutters an ein Modul eines modularen Werkzeugsystems oder an eine Maschinenspindel unterteilen lässt. Der Spannteil weist um eine zentrische Aufnahmeöffnung herum wenigstens eine mit Fluiddruck beaufschlagbare Druckkammer auf, die über eine elastisch nachgiebige Dehnwand von der Aufnahmeöffnung getrennt und über einen Druckkanal mit einer im Grundkörper angeordneten Druckerzeugungseinrichtung verbunden ist. Bei einer Fluiddruckbeaufschlagung der wenigstens einen Druckkammer wölbt sich die Dehnwand gegen ein in der zentrischen Aufnahmeöffnung aufgenommenes Schaftwerkzeug, z.B. einen Bohrer oder Fräser, aus, um das in der zentrischen Aufnahmeöffnung aufgenommene Schaftwerkzeug kraftschlüssig zu spannen. Zum Auspannen des Schaftwerkzeugs wird der Fluiddruck in der wenigstens einen Druckkammer verringert. Zum Regulieren des Fluiddrucks in der wenigstens einen Druckkammer haben die bekannten Hydrodehnspannfutter regelmäßige eine Druckerzeugungseinrichtung in Form einer Kolbenmechanik mit einem in einer Bohrung im Spannteil sitzenden Druck- und Dichtkörper, der einen Druckraum begrenzt, einem in der Bohrung sitzenden Kolben, der den Druck- und Dichtkörper gegen den Druckraum schiebt, und einer den Kolben verschiebenden Stellschraube, die in einer an die Bohrung axial anschließenden Gewindebohrung sitzt. Die Gewindebohrung mündet an der Außenmantelfläche des Spannteils, so dass die Stellschraube von seitlich außerhalb des Spannteils aus betätigbar ist. Der Druckraum ist über den Druckkanal mit der wenigstens einen Druckkammer verbunden.

Die Druckerzeugungseinrichtung ist demnach im Grundkörper dergestalt exzentrisch angeordnet, dass sie sich von radial außen nach radial innen erstreckt. Diese exzentrisch liegende Anordnung der Druckerzeugungseinrichtung resultiert in einer asymmetrischen Querschnittsgestaltung des Grundkörpers und damit in einer ungleichen Massenverteilung um die Dreh- oder Längsmittelachse und einer Unwucht im Betrieb des Hydrodehnspannfutters. Um unwuchtbedingte Rundlauffehler eines eingespannten Schaftwerkzeugs so gering als möglich zu halten, werden die Hydrodehnspannfutter daher regelmäßig vor dem ersten Einsatz ausgewuchtet. Je nach erforderlicher Wuchtgüte oder Ausmaß der Unwucht kann das Auswuchtverfahren sehr aufwendig sein.

Ein Hydrodehnspannfutter, das sich durch eine hohe Rundlaufgenauigkeit auszeichnet, ist aus der DE 102010008872 A1 bekannt. Diese Druckschrift schlägt ein Hydrodehnspannfutter vor, bei dem zur Werkzeugspannung ein Druckfluid aus diametral gegenüberliegenden, d.h. exzentrisch liegenden, Kolbenräumen im Grundkörper über Druckkanäle in spannteilseitige Druckkammern verdrängt wird. Die Druckerzeugung erfolgt über in den Kolbenräumen axial-verschieblich angeordnete Kolben, die über eine axial-zentrisch angeordnete Zugstange betätigt werden. Der Zentrumsbereich des Grundkörpers ist allerdings von der Zugstange bzw. einem die Zugstange mit den beiden Kolben verbindenden Zugkörper in Anspruch genommen, so dass das unwuchtreduzierte Hydrodehnspannfutter keine zentrische Kühlschmiermittelversorgung eines im Spannteil eingespannten Schaftwerkzeugs entlang der Achse erlaubt.

Eine derartige axial-zentrische Kühlschmiermittelversorgung ist jedoch insbesondere für die sogenannte Minimalschmiermengen-Technologie (kurz: MMS-Technologie) entscheidend, bei der es darauf ankommt, ein werkzeugmaschinenseitig bereitgestelltes Öl-Luft-Gemisch als Kühlschmiermittel über eine im Grundkörper des Hydrodehnspannfutters axial-zentrisch angeordnete Kühlschmiermittelzufuhreinrichtung, wie sie beispielsweise in der bereits erwähnten DE 10312743 A1 gezeigt ist, prozesssicher und dosiert zu einem eingespannten Schaftwerkzeug zu leiten.

Die Druckschrift DE 10 2017 107488 A1 zeigt eine Spannvorrichtung zum Spannen einer Werkzeugaufnahme in einem drehbaren Maschinenteil einer Werkzeugmaschine. Eine Druckerzeugungseinrichtung der Spannvorrichtung weist einen ringförmigen Kolben auf, der in einem zu einer Aufnahmeöffnung konzentrisch ausgebildeten ringförmigen Kolbenraum axial verschiebbar angeordnet und betätigbar ist. Die Betätigung des Kolbens mittels eines Druckmediums erfolgt über exzentrisch angeordnete Zuführöffnungen und Anschlussbohrungen.

Ausgehend von einem Hydrodehnspannfutter, wie es beispielsweise aus der WO 2017/093280 A1 bekannt ist, liegt der Erfindung daher die Aufgabe zugrunde, ein unwuchtreduziertes Hydrodehnspannfutter bereit zu stellen, das eine axial-zentrische Kühlschmiermittelversorgung eines im Spannteil eingespannten Schaftwerkzeugs zulässt.

Diese Aufgabe wird durch ein Hydrodehnspannfutter mit den Merkmalen des Anspruchs 1 gelöst. Vorteilhafte oder bevorzugte Weiterbildungen sind Gegenstand abhängiger Ansprüche.

Das erfindungsgemäße Hydrodehnspannfutter umfasst funktional einen sich entlang einer Dreh- oder Längsmittelachse erstreckenden Grundkörper, der einen Spannteil zum Aufnehmen und Spannen eines Schaftwerkzeugs, z.B. Bohrer oder Fräser, und einen Schaftteil mit einem Hohlschaft zum direkten oder indirekten Ankuppeln des Hydrodehnspannfutters an ein Modul eines modularen Werkzeugsystems oder an eine Maschinenspindel aufweist. Der Spannteil weist eine axial verlaufende zentrische Aufnahmeöffnung und um die Aufnahmeöffnung herum wenigstens eine mit Fluiddruck beaufschlagbare Druckkammer auf. Die wenigstens eine Druckkammer ist durch eine elastisch nachgiebige Dehnwand von der Aufnahmeöffnung getrennt. Bei einer Fluiddruckbeaufschlagung der wenigstens einen Druckkammer wölbt sich die Dehnwand gegen ein in der zentrischen Aufnahmeöffnung aufgenommenes Schaftwerkzeug aus, um das in der zentrischen Aufnahmeöffnung aufgenommene Schaftwerkzeug kraftschlüssig zu spannen. Die wenigstens eine Druckkammer kann in Form einer die Aufnahmeöffnung ringförmig umgebenden Druckammer ausgebildet sein und eine oder mehrere derartige Druckkammern umfassen, die axial voneinander getrennt ausgebildet und fluidisch miteinander verbunden sind. Bevorzugt weist das Hydrodehnspannfutter zwei ringförmig ausgebildete Druckkammern auf, die voneinander axial beabstandet und über einen Ringkanal oder einen oder mehrere exzentrisch liegende, vorzugsweise axial verlaufende, Verbindungskanäle fluidisch miteinander verbunden sind. In jedem Fall ist die wenigstens eine Druckkammer über ein Druckkanalsystem mit einem Druckraum und einer den Druckraum begrenzenden, im Grundkörper, vorzugsweise im Schaftteil, angeordneten Druckerzeugungseinrichtung verbunden ist.

Im Unterschied zu den eingangs diskutierten gattungsgemäßen Hydrodehnspannfutter umfasst die Druckerzeugungseinrichtung erfindungsgemäß einen ringförmigen Kolben. Der ringförmige Kolben ist in einem zur Aufnahmeöffnung konzentrisch angeordneten ringförmigen Kolbenraum axial verschiebbar angeordnet, der auf der dem Spannteil zugewandten Seite, d.h. spannteilseitig, mit dem Druckraum verbunden ist und auf der dem Schaftteil zugewandten Seite, d.h. schaftteilseitig, in den Hohlschaft mündet bzw. über den Hohlschaft hindurch zugänglich ist, wodurch der ringförmige Kolben durch den Hohlschaft hindurch betätigbar ist. Der ringförmige Kolbenraum kann in den beispielsweise ebenfalls ringförmigen Druckraum nahtlos übergehen. Der Kolbenraum und der Druckraum können daher Längenabschnitte einer ringförmigen Ausnehmung sein.

In jedem Fall erstreckt sich die Druckerzeugungseinrichtung parallel zur Dreh- oder Längsmittelachse und ringförmig um die Dreh- oder Längsmittelachse. Die erfindungsgemäße ringförmige konzentrische Anordnung der Druckerzeugungseinrichtung ermöglicht eine deutliche Reduzierung einer auf die Ausgestaltung und Anordnung der Druckerzeugungseinrichtung zurückzuführende Unwucht des Hydrodehnspannfutters, da durch die ringförmige Ausgestaltung eine gleichmäßigere Massenverteilung um die Dreh- oder Längsmittelachse des Hydrodehnspannfutters herum erreichbar ist, bei der die Hauptträgheitsachsen des Grundkörpers und der Druckerzeugungseinrichtung zumindest in der Nähe der Dreh- oder Längsmittelachse liegen.

Des Weiteren bietet die erfindungsgemäße Lösung die Möglichkeit, den von der Druckerzeugungseinrichtung nicht beanspruchten Zentrumsbereich des Grundkörpers für die Kühlschmiermittelversorgung eines im Spannteil eingespannten Schaftwerkzeugs zu nutzen. Beispielsweise kann der Zentrumsbereich des Grundkörpers in der dem Fachmann an sich bekannten Art und Weise zur Anordnung einer axial-zentrisch verlaufenden Kühlschmiermittelzufuhreinrichtung genutzt werden, wie es beispielsweise aus der oben erwähnten DE 10312743 A1 bekannt ist. Die in diesem Fall radial innerhalb der Druckerzeugungseinrichtung angeordnete Kühlschmiermittelzufuhreinrichtung kann im Besonderen eine als ein Axialanschlag für ein im Spannteil eingespanntes Schaftwerkzeug fungierende Stellschraube umfassen, die mit dem Grundkörper verschraubt ist. Die konzentrische Anordnung der den ringförmigen Kolben aufweisenden Druckerzeugungseinrichtung und der Kühlschmiermittelzufuhreinrichtung ermöglicht darüber hinaus eine unwuchtreduzierte Gestaltung des Hydrodehnspannfutters.

In einer bevorzugten Ausführungsform kann der Kolben druckraumseitig mit einer ringförmigen Dichtung versehen sein, wodurch ein schaftteilseitiges Austreten von Druckfluid aus dem Druckraum in den Kolbenraum und Hohlschaft verhindert oder eingeschränkt werden kann.

Zur Verbesserung der Dichtwirkung der ringförmigen Dichtung kann die Dichtung druckraumseitig radial gespreizt angeordnete Dichtlippen aufweisen, im Besonderen dergestalt, dass eine äußere Dichtlippe entlang einer druckraumseitigen Außenumfangswand des ringförmigen Kolbenraums und eine innere Dichtlippe entlang einer druckraumseitigen Innenumfangswand des ringförmigen Kolbenraums ringförmig verlaufen. Dadurch werden die so verlaufenden Dichtlippen bei steigendem Fluiddruck im Druckraum gegen die Umfangsflächen des Kolbenraums gepresst, wodurch ein Austreten des Fluids stärker begrenzt wird. Zu diesem Zweck kann der Kolben weiterhin axial zweiteilig aus einem durch den Hohlschaft hindurch betätigbaren Kolbenkörper und einem die Dichtung tragenden Dichtungsträger aufgebaut sein, wobei der Kolbenkörper und Dichtungsträger durch Form-, Kraft- und/oder Stoffschluss drehfest oder durch Form- und/oder Kraftschluss drehbeweglich verbunden sein können.

In einer anderen bevorzugten Ausführungsform kann das erforderliche Kolbenspiel zwischen dem Kolben und dem Grundkörper durch ringförmige Dichtungen bzw. Ringdichtungen abgedichtet sein. Dazu kann/können eine, zwei oder mehrere Ringdichtungen vorgesehen sein, wobei die Ringdichtungen beispielsweise als O-Ringe, V-Ringe oder ähnliche Ringe ausgebildet sein können.

Der Kolbenraum des Hydrodehnspannfutters kann axial im Bereich zwischen der Aufnahmeöffnung und dem Hohlschaft, vorzugsweise im Schaftteil, ausgebildet sein. Da die Druckerzeugungseinrichtung durch den von dem Spannteil abgewandten offenen Hohlschaft des Schaftteils hindurch zugänglich ist, kann der Hohlschaft zu diesem Zweck beispielsweise als ein dem Fachmann bekannter Hohlschaftkegel (HSK)-, Steilkegel (SK)- oder Zylinder-Schaft ausgebildet sein.

Ein im Spannteil einzuspannendes Schaftwerkzeug kann in der dem Fachmann bekannten Weise, z.B. für die sogenannte Minimalmengenschmierung, interne Kühlschmiermittelkanäle aufweisen, um ein werkzeugmaschinenseitig zugeführtes Kühlschmiermittel zu den Werkzeugschneiden zu leiten. Zu diesem Zweck kann das Hydrodehnspannfutter eine bereits erwähnte axial-zentrisch verlaufende Kühlschmiermittelzufuhreinrichtung aufweisen, die ein werkzeugmaschinenseitig zugeführtes Kühlschmiermittel an das im Spannteil eingespannten Schaftwerkzeug weiterleitet. Das Hydrodehnspannfutter kann daher einen axial-zentrischen Durchlass zwischen dem Hohlschaft und der Aufnahmeöffnung zur Anordnung einer Kühlschmiermittelzufuhreinrichtung aufweisen, wie sie z.B. aus der oben erwähnten DE 10312743 A1 bekannt ist. Die demnach radial innerhalb der Druckerzeugungseinrichtung konzentrisch zur Druckerzeugungseinrichtung angeordnete Kühlschmiermittelzufuhreinrichtung kann im Besonderen eine als ein Axialanschlag für ein im Spannteil eingespanntes Schaftwerkzeug fungierende Stellschraube umfassen, die mit dem Grundkörper verschraubt ist.

Die Druckerzeugungseinrichtung kann zum Verschieben des Kolbens einen Schraubkörper umfassen, der mit dem Grundkörper axial verschraubt und durch den Hohlschaft hindurch betätigbar ist. Der Schraubkörper kann zu diesem Zweck aus einer in den Grundkörper eingeschraubten Hohlschraube, d.h. ein Außengewinde aufweisen, oder einer mit dem Grundkörper verschraubten Mutter gebildet sein, d.h. ein Innengewinde aufweisen, und mittelbar oder unmittelbar auf den Kolben einwirken.

Die hierfür im Grundkörper vorgesehene Innen- oder Außengewindebohrung kann vorzugsweise mit demjenigen Längenabschnitt des ringförmigen Kolbenraums, in dem der Kolben angeordnet ist, und dem Druckraum im Schaftteil ausgebildet sein, während das Druckkanalsystem wenigstens teilweise im Spannteil ausgebildet sein kann. Die Ausbildung der Gewindebohrung und des Kolbenraums und Druckraums im Schaftteil und des Druckkanalsystems im Spannteil ist insbesondere dann von Vorteil, wenn der Schaftteil und der Spannteil aus zunächst getrennt gefertigten und dann durch Form-, Kraft- und/oder Stoffschluss axial aneinandergefügten Körpern gebildet sind. In diesem Fall kann insbesondere der Spannteil, der mit der wenigstens einen Druckkammer und dem Kanalsystems kompliziertere Hohlstrukturen aufweist, durch 3D-Druck generativ oder additiv gefertigt werden, während der Schaftteil, der mit dem Hohlschaft, der Gewindebohrung und des ringförmigen Kolbenraums einfachere Hohlstrukturen aufweist, auf herkömmliche Weise, z.B. durch spanabhebende Bearbeitung eines metallischen Körpers, gefertigt sein.

Die getrennte Fertigung des Spannteils und Schaftteils ermöglicht einen modularisierten Aufbau des Spannfutters und demzufolge ein breites Anwendungsspektrum, da zur Herstellung des Spannfutters ein geeigneter Spannteil mit einem geeigneten Schaftteil kombiniert werden kann.

Für eine drehfeste, axiale Verbindung sind der Spannteil und Schaftteil wie bereits erwähnt form-, kraft- und/oder stoffschlüssig aneinandergefügt. Eine kraftschlüssige Fügung kann z. B. durch Verschraubung, Klemmung oder dergleichen erreicht werden, was technisch einfach zu realisieren ist und eine stabile und gleichzeitig wieder lösbare Verbindung gewährleistet. Eine stoffschlüssige Verbindung wird z. B. durch Verschweißen, Verlöten oder Verkleben oder durch 3D-Druck erreicht.

Alternativ dazu kann der Grundkörper des Hydrodehnspannfutters insgesamt, z.B. durch additive Fertigung monolithisch, aufgebaut sein, wodurch eine hohe Festigkeit, Langlebigkeit sowie eine hohe Rundlaufgenauigkeit gewährleistet und unbeabsichtigte Interaktionen zwischen dem Kolben und möglichen Unregelmäßigkeiten an der Kontaktstelle zwischen Schaftteil und Spannteil vermieden werden können.

Das Hydrodehnspannfutter kann ferner ein Entlüftungskanalsystem umfassen, das in der dem Fachmann an sich bekannten Art und Weise zumindest einen Entlüftungskanal aufweist, der die wenigstens eine Druckkammer mit einer Entlüftungseinrichtung verbindet. Die Entlüftungseinrichtung dient zum Entlüften des aus der Druckkammer, dem Druckkanalsystem, des ringförmigen Kolbenraums usw. gebildeten Druckfluidsystems nach einem erstmaligen oder erneuten Befüllen und wird bzw. ist nach dem Befüllen hermetisch nach außen abgeschlossen.

Um durch die Gestaltung bedingte Unwuchten so gering wie möglich zu halten, kann das Entlüftungskanalsystem in Bezug auf die Drehachse diametral gegenüberliegende Entlüftungskanäle umfassen. Das bedeutet, die Entlüftungskanäle sind um die Dreh- oder Längsmittelachse 180° zueinander versetzt.

Zu dem selben Zweck kann das Druckkanalsystem ähnlich wie beim Entlüftungskanalsystem diametral gegenüberliegende Druckkanäle umfassen. Bei einer Vielzahl von Entlüftungs- und/oder Druckkanälen können sie aber auch beispielsweise gleichmäßig, also in gleichen Abständen zueinander, oder dergleichen um die Dreh- oder Längsmittelachse verteilt sein.

Im Folgenden wird die Erfindung anhand der beigefügten Zeichnungen erläutert, wobei
Fig. 1 schematisch einen Längsschnitt des erfindungsgemäßen Hydraulikspannfutters nach einer ersten Ausführungsform zeigt;
Fig. 2 schematisch einen Querschnitt des erfindungsgemäßen Hydraulikspannfutters entlang einer in Fig. 1 dargestellten Linie B-B zeigt;
Fig. 3 schematisch einen Querschnitt des erfindungsgemäßen Hydraulikspannfutters entlang einer in Fig. 1 dargestellten Linie C-C zeigt;
Fig. 4a schematisch eine vergrößerte Ansicht eines in Fig. 1 umrandeten Bereichs A zeigt, wobei ein verändertes Beispiel der Ausführungsform dargestellt ist;
Fig. 4b schematisch eine vergrößerte Ansicht des in Fig. 1 umrandeten Bereichs A zeigt, wobei ein weiteres verändertes Beispiel der Ausführungsform dargestellt ist; und
Fig. 5 schematisch einen Längsschnitt des erfindungsgemäßen Hydraulikspannfutters nach einer zweiten Ausführungsform zeigt;

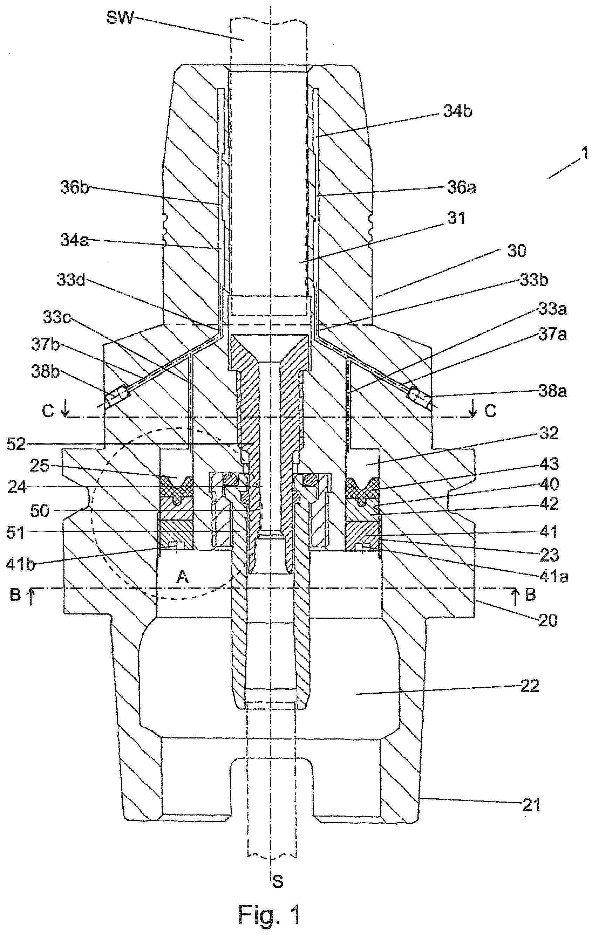

Mit Hilfe der Figuren 1 bis 4b werden zunächst eine erste Ausführungsform und Abwandlungen der ersten Ausführungsform eines erfindungsgemäßen Hydrodehnspannfutters beschrieben.

Ein erfindungsgemäßes Hydrodehnspannfutter hat einen sich entlang einer Dreh- oder Längsmittelachse S erstreckenden Grundkörper 1, der sich funktional in einen Schaftteil 20 und einen Spannteil 30 unterteilen lässt. Diese funktionale Unterteilung ist in Fig. 1 durch eine Stricklinie angedeutet.

Der Schaftteil 20 und der Spannteil 30 sind dabei integral in einem Grundkörper ausgebildet. Alternativ dazu können der Schaftteil 20 und der Spannteil jedoch auch getrennt voneinander ausgebildet sein, sodass der Schaftteil 20 an seiner dem Spannteil 30 zugewandten Stirnseite mit dem Spannteil 30 form-, kraft- und/oder stoffschlüssig verbunden sein kann.

Der Spannteil 30 ist zum Aufnehmen und Spannen eines Schaftwerkzeugs SW vorgesehen. Zu diesem Zweck weist er eine zentrische Aufnahmeöffnung 31 auf, in der das Schaftwerkzeugs SW angeordnet werden kann. Um die Aufnahmeöffnung 31 herum sind zwei mit Fluiddruck beaufschlagbare umlaufende Druckkammern 34a, 34b ausgebildet, die jeweils über elastisch nachgiebige Dehnwände von der Aufnahmeöffnung 31 getrennt sind. Jedoch können auch nur eine oder eine Vielzahl von Druckkammern vorgesehen sein, wobei sie auch nur teilweise umlaufend oder anders ausgebildet sein können.

Die Druckkammern 34a, 34b sind über parallel zur Dreh- oder Längsmittelachse S verlaufende exzentrische Verbindungskanäle 36a, 36b miteinander sowie über ein Druckkanalsystem, das Druckkanäle 33a-33d umfasst, mit einem ringförmigen Druckraum 32 verbunden, der mit einem Fluid befüllt ist und in dem durch eine später beschriebene Druckerzeugungseinrichtung, die im Schaftteil 20 angeordnet ist, über das Fluid ein Druck erzeugt werden kann, mit dem die Druckkammern 34a, 34b beaufschlagt werden können. Bei einer Fluiddruckbeaufschlagung der beiden Druckkammern 34a, 34b wölben sich die Dehnwände gegen ein in der zentrischen Aufnahmeöffnung 31 aufgenommenes Schaftwerkzeug SW, z.B. einen Bohrer oder Fräser, aus, wodurch das Schaftwerkzeug SW kraftschlüssig gespannt wird. Zum Auspannen des Schaftwerkzeugs SW wird der Fluiddruck in den Druckkammern 34a, 34b verringert.

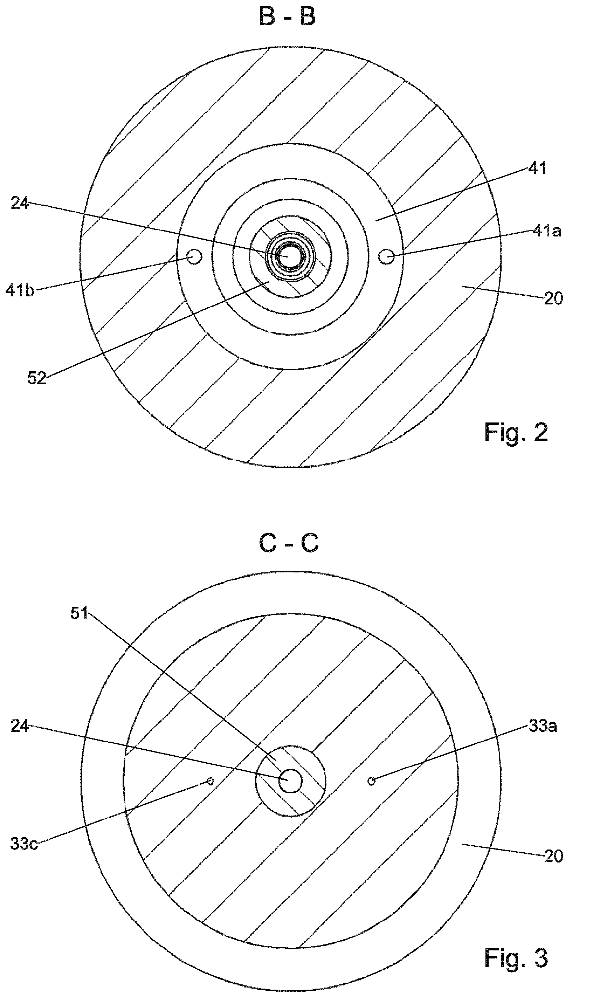

Wie in der Fig. 3 zu sehen ist, die einen von der Stirnseite aus gesehen Querschnitt des in Fig. 1 gezeigten Hydrodehnspannfutters entlang der Linie C-C darstellt, liegen die beiden Druckkanäle 33a, 33b und 33c, 33d diametral gegenüber, wodurch konstruktionsbedingte Unwuchten vermieden werden können. Jedoch können auch mehr als zwei Druckkanäle vorgesehen und vorzugsweise äquidistant um die Dreh- oder Längsmittelachse S verteilt sein.

Ferner sind der Druckraum 32 und die Druckkammern 34a, 34b mit einem Entlüftungskanalsystem 37a, 37b verbunden, über das sie durch Entlüftungseinrichtungen 38a, 38b nach außen geöffnet werden können, wobei dies hauptsächlich der einmaligen Entlüftung des gesamten Systems bei Inbetriebnahme dient und das System sonst hermetisch durch die Entlüftungseinrichtungen 38a, 38b abgeschlossen ist. Die Entlüftungseinrichtungen 38a, 38b sind hier Kegelschrauben, die von außen in eine zur Dreh- oder Längsmittelachse S verlaufenden Gewindebohrung eingeschraubt sind und kugelförmige Dichtung aufweisen, die jeweils gegen eine kegelförmige Sitzfläche gepresst werden, um die Entlüftungskanäle 37a, 37b dicht abzuschließen.

Wie vorstehend beschrieben ist die Druckerzeugungseinrichtung im Schaftteil 20 vorgesehen. Der Schaftteil 20 ist dafür vorgesehen, den Grundkörper 1 auf der vom Spannteil 30 abgewandten Seite direkt oder indirekt mit einem Modul eines modularen Werkzeugsystems (d.h. einer Trennstelle) oder einer Maschinenspindel einer Werkzeugmaschine (d.h. einer Schnittstelle) zu verbinden. Für solch eine Verbindung weist der Schaftteil 20 einen wie in der Fig. 1 gezeigten Hohlschaft 21 auf der vom Spannteil 30 abgewandten Seite auf. In der bevorzugten Ausführungsform ist der Schaft von einem dem Fachmann an sich bekannten HSK-Schaft gebildet.

Wie in Fig. 1 zu sehen ist, weist der Hohlschaft 21 einen zur Dreh- oder Längsmittelachse S im Wesentlichen rotationssymmetrisch ausgebildeten, zentrisch liegenden Hohlraum 22 auf, der zur vom Spannteil 30 abgewandten Seite hin offen ist. Auf seiner dem Spannteil 30 zugewandten Seite weist der Schaftteil 20 einen axial verlaufenden zentrischen Durchlass 24 auf, der den Hohlraum 22 mit der Aufnahmeöffnung 31 verbindet, eine konzentrisch um den Durchlass 24 herum ringförmig ausgebildete Ausnehmung 25, die die Druckkanäle 33a-33d mit dem Hohlraum 22 verbindet, und die bereits erwähnte Druckerzeugungseinrichtung, die in der Ausnehmung 25 angeordnet ist und mit der der Druckraum 32 mit Druck beaufschlagt werden kann. Die Ausnehmung 25 lässt sich funktional unterteilen in den bereits erwähnten Druckraum 32 und einen Kolbenraum 40.

Die in der Fig. 1 gezeigte Druckerzeugungseinrichtung umfasst einen ringförmigen Kolben 42, der in dem Kolbenraum 40 axial verschiebbar angeordnet und durch den Hohlschaft 21 hindurch betätigbar ist.

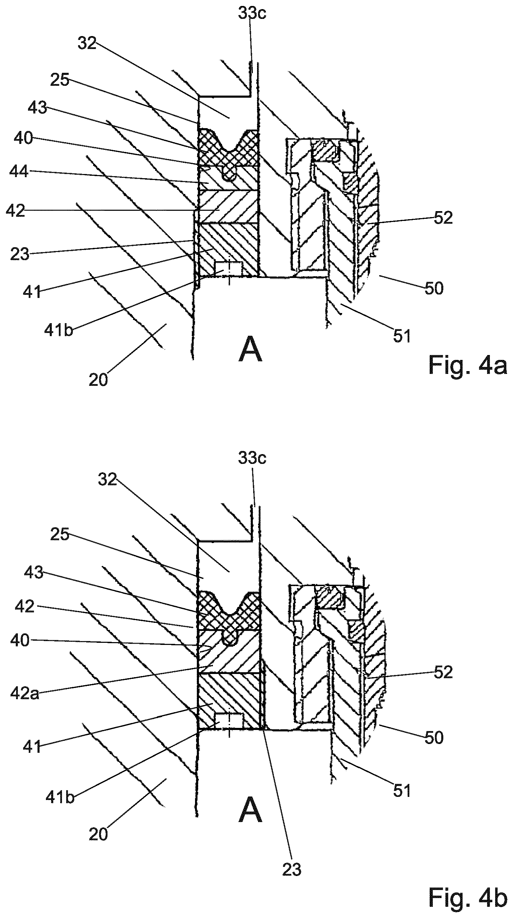

Dem Kolben 42 ist hohlschaftseitig ein im Kolbenraum 42 angeordneter ringförmiger Schraubkörper 41 in Form einer Hohlschraube zugeordnet. Der Schraubkörper 41 greift in ein an der Außenumfangsfläche des Kolbenraums 40 umlaufend ausgebildetes Gewinde 23 ein. Wie in Fig. 2 gezeigt ist, die einen vom Hohlschaft 21 aus gesehen Querschnitt des in Fig. 1 gezeigten Hydrodehnspannfutters entlang der Linie B-B darstellt, weist der Schraubkörper 41 hier zwei diametral gegenüberliegende Sacklöcher 41a, 41b auf, in die ein durch den Hohlschaft 21 hindurch geführtes (nicht gezeigtes) Spezialwerkzeug greifen und durch das der Schraubkörper 41 gedreht werden kann, wodurch der Kolben 42 axial verschoben wird. Jedoch können auch eine Vielzahl von Sacklöchern ausgebildet sein, die vorzugsweise äquidistant um die Dreh- oder Längsmittelachse S verteilt sind, oder es kann ein anderes Spezialwerkzeug zum Drehen verwendet werden. Alternativ dazu kann das vorstehend beschriebene Gewinde 23, wie in Fig. 4b dargestellt, die eine Abwandlung der Druckerzeugungseinrichtung vergrößert zeigt, auch an der Innenumfangswand des ringförmigen Kolbenraums 40 ausgebildet sein, wobei der Schraubkörper 41 dann in der Form einer Mutter in das Innengewinde 23 eingeschraubt werden kann.

Auf der dem Druckraum 32 zugewandten Seite ist dem Kolben 42 ein im ringförmigen Kolbenraum 40 passgenau sitzender ringförmiger Dichtungskörper 43 aus einem elastischen Material, z.B. Gummi oder hochfestem Kunststoff, zugeordnet, der zum Grund des ringförmigen Kolbenraums 40 hin den Druckraum 32 begrenzt. Der ringförmige Dichtungskörper 43 weist dabei, wie in Fig. 1 gezeigt, zwei radial gespreizt (v-förmig) ausgebildete Dichtlippen auf, die jeweilig an der Außen- und Innenumfangswand des ringförmigen Kolbenraums 40 anliegen. Wird der Fluiddruck im Druckraum 32 durch eine Verschiebung des Kolbens 42 und des Dichtkörpers 43 in Richtung Spannteil 30 erhöht, werden die Dichtlippen jeweils stärker gegen die Außen- und Innenumfangswand des Kolbenraums 40 gedrückt, wodurch ein hohlraumseitiges Austreten des Fluids erschwert wird und die Dichtigkeit des Systems verbessert werden kann.

Um die Dichtwirkung noch weiter zu verbessern, kann wie in Fig. 4a gezeigt, die eine weitere Abwandlung der Druckerzeugungseinrichtung vergrößert zeigt, der Kolben 42 der Druckerzeugungseinrichtung axial zweiteilig aus einem durch den Hohlschaft 21 hindurch betätigbaren Kolbenkörper 42a und einem den Dichtungskörper 44 tragenden Dichtungsträger 44 aufgebaut sein. Der Kolbenkörper 42a und Dichtungsträger 44 können dabei durch (nicht gezeigten) Form-, Kraft- und/oder Stoffschluss drehfest oder durch Form- und/oder Kraftschluss drehbeweglich verbunden sein.

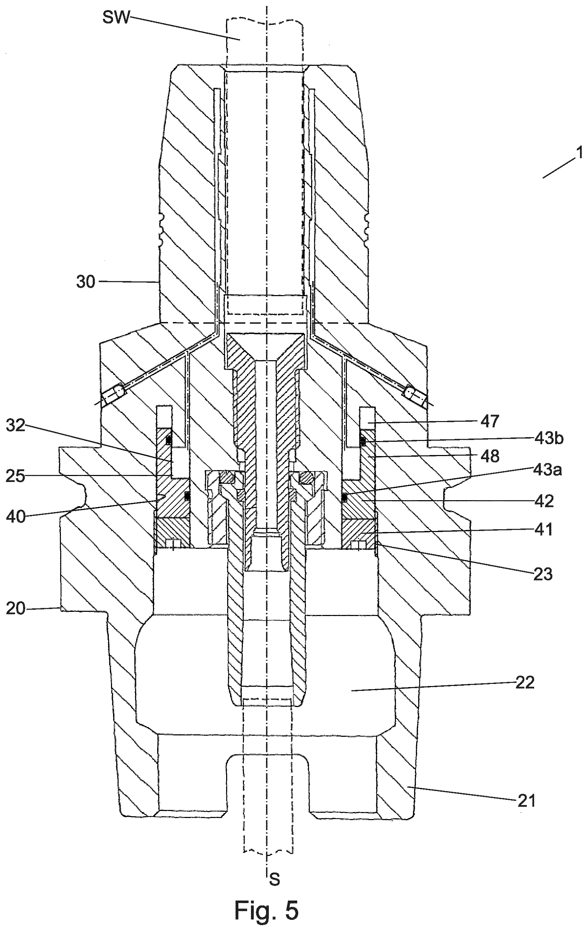

Wie vorstehend beschrieben ist die ringförmigen Druckerzeugungseinrichtung in dem um den Durchlass 24 herum ausgebildeten Kolbenraum 40 angeordnet. In diesem Durchlass 24 ist in der gezeigten Ausführungsform eine dem Fachmann an sich bekannte, sich entlang der Dreh- oder Längsmittelachse S erstreckende Kühlschmiermittelzufuhreinrichtung 50 angeordnet, die sich vom Hohlraum 22 bis in die Aufnahmeöffnung 31 hinein verläuft. Die Kühlschmiermittelzufuhreinrichtung 50 umfasst eine Kühlschmiermittelzufuhrhülse 51 und eine in den Durchlass 24 des Spannteils 30 eingeschraubte Stellschraube 52, die die Kühlschmiermittelzufuhrhülse 51 mit der Aufnahmeöffnung 31 verbindet und als ein Anschlag für ein in das Spannteil 30 eingespanntes Schaftwerkzeug dient. Die Kühlschmiermittelzufuhrhülse 51 wird über den Hohlraum 22 in den Durchlass 24 eingeschraubt. Die Kühlschmiermittelzufuhrhülse 51 erstreckt sich in den Hohlraum 22, wobei sie mit einer (im unteren Teil der Fig. 1 und 5 durch Strichlinien angedeuteten) Kühlschmiermittelzufuhr der Maschinenspindel verbunden werden kann, wodurch Kühlschmiermittel zugeführt und zu einem in der Aufnahmeöffnung 31 angeordneten Schaftwerkzeug SW weitergeleitet werden kann.

Fig. 5 zeigt eine zweite Ausführungsform des erfindungsgemäßen Hydrodehnspannfutters. Diese unterscheidet sich von der vorstehend beschriebenen Ausführungsform lediglich durch die Ausgestaltung der Druckerzeugungseinrichtung.

In der zweiten Ausführungsform schließt an die ringförmige Ausnehmung 25 in Richtung Spannteil 30 eine in der radialen Abmessung kleinere Führungsausnehmung 47 an. Der ringförmige Kolben 42 weist einen sich in Richtung Spannteil erstreckenden Kolbenfortsatz 48 auf, der im Vergleich zum Kolben 42 eine kleinere radiale Dicke hat und zur Führung des Kolbens 42 in der Führungsausnehmung 47 angeordnet ist. Der Druckraum 32 ist durch zwei ringförmige Dichtungskörper 43a, 43b, im Besonderen in der Form von O-Ringen oder dergleichen, aus einem elastischen Material, z.B. Gummi oder hochfestem Kunststoff, abgedichtet, die in der gezeigten Ausführungsform innenumfangseitig am Kolben 42 bzw. Kolbenfortsatz 48 angeordnet sind. Alternativ dazu kann zur Abdichtung des Kolbenspiels zwischen dem Kolben 42 und dem Grundkörper 1 der Dichtungskörper 43b auch außenumfangsseitig am Kolbenfortsatz 48 oder Kolben 42 angeordnet sein.

Wie die Fig. 1 bis 5 zeigen, ist die Druckerzeugungseinrichtung erfindungsgemäß axial im Bereich zwischen der Aufnahmeöffnung 31 und dem Hohlschaft 21 in dem zur Aufnahmeöffnung 31 koaxialen ringförmigen Kolbenraum 40, der in den Hohlschaft 21 mündet, angeordnet und durch den Hohlschaft 21 hindurch betätigbar. Die Druckerzeugungseinrichtung hat demnach eine der Richtung der Dreh- oder Längsmittelachse S entsprechende Erstreckungsrichtung. Durch die erfindungsgemäße ringförmige Anordnung der Druckerzeugungseinrichtung kann eine auf die Druckerzeugungseinrichtung zurückzuführende Unwucht des Hydrodehnspannfutters deutlich reduziert werden, da durch die erfindungsgemäße zentrische Anordnung eine gleichmäßigere Massenverteilung um die Dreh- oder Längsmittelachse S des Hydrodehnspannfutters herum erreichbar ist, bei der bzw. die Hauptträgheitsachsen des Grundkörpers 1 und der Druckerzeugungseinrichtung zumindest in der Nähe der Dreh- oder Längsmittelachse S liegen.

Des Weiteren kann der von der Druckerzeugungseinrichtung nicht beanspruchten Zentrumsbereich des Grundkörpers 1 für die Kühlschmiermittelversorgung eines im Spannteil 30 eingespannten Schaftwerkzeugs genutzt werden. Wie die Fig. 1 bis 5 zeigen, kann der Zentrumsbereich des Grundkörpers 1 in der dem Fachmann an sich bekannten Art und Weise zur Anordnung einer axial-zentrisch verlaufenden Kühlschmiermittelzufuhreinrichtung genutzt werden, die in diesem Fall radial innerhalb der Druckerzeugungseinrichtung angeordnete ist. Die konzentrische Anordnung der den ringförmigen Kolben 42 aufweisenden Druckerzeugungseinrichtung und der Kühlschmiermittelzufuhreinrichtung ermöglicht darüber hinaus eine unwuchtreduzierte Gestaltung des Hydrodehnspannfutters.

Innerhalb des Schutzbereichs der Ansprüche sind Abweichungen von der vorstehend beschriebenen Ausführungsform möglich.

So können z. B. anstatt der beiden in Fig. 1 und 5 gezeigten rundumlaufenden Druckkammern 34 eine, drei, vier oder mehr ringförmig rundumlaufende Druckkammer(n) vorhanden sein, oder die Druckkammern können jeweils nur teilweise umlaufend ausgebildet sein.

Die wenigstens eine Druckkammer 34 kann über eine in die zentrische Aufnahmeöffnung 31 axial eingeschobene Dehnbuchse realisiert sein, wie es z.B. aus der DE 102012315036 A1 bekannt ist.
- 1: Grundkörper
- 2: Dreh- oder Längsmittelachse
- 20: Schaftteil
- 21: Hohlschaft
- 22: Hohlraum
- 23: Gewinde
- 24: Durchlass
- 25: Ausnehmung
- 30: Spannteil
- 31: Aufnahmeöffnung
- 32: Druckraum
- 33a-33d: Druckkanal
- 34: Druckkammer
- 36a, 36b: Verbindungskanal
- 37a, 37b: Entlüftungskanal
- 38: Entlüftungseinrichtung
- 41: Schraubkörper
- 41a, 41b: Sackloch
- 42: Kolben
- 42a: Kolbenkörper
- 43: Dichtungskörper
- 44: Dichtungsträger
- 47: Führungsausnehmung
- 48: Kolbenfortsatz
- 50: Kühlschmiermittelzufuhreinrichtung
- 51: Kühlschmiermittelzufuhrhülse
- 52: Stellschraube

## Patentansprüche

1. Hydrodehnspannfutter mit einem sich entlang einer Dreh- oder Längsmittelachse (S) erstreckenden Grundkörper (1), der einen Spannteil (30) zum Aufnehmen und Spannen eines Schaftwerkzeugs (SW) und einen Schaftteil (20) mit einem Hohlschaft (21) zum direkten oder indirekten Ankuppeln des Hydrodehnspannfutters an ein Modul eines modularen Werkzeugsystems oder an eine Maschinenspindel aufweist, wobei der Spannteil (30) eine zentrische Aufnahmeöffnung (31) und um die Aufnahmeöffnung (31) herum wenigstens eine mit Fluiddruck beaufschlagbare Druckkammer (34) aufweist, die über eine elastisch nachgiebige Dehnwand von der Aufnahmeöffnung (31) getrennt und über ein Druckkanalsystem mit einem Druckraum (32) verbunden ist, und einer im Grundkörper (1) angeordneten Druckerzeugungseinrichtung zur Druckbeaufschlagung des Druckraums (32), **dadurch gekennzeichnet, dass**
die Druckerzeugungseinrichtung einen ringförmigen Kolben (42) umfasst, der im Grundkörper (1) in einem zur Aufnahmeöffnung (31) konzentrisch ausgebildeten ringförmigen Kolbenraum (40), der spannteilseitig mit dem Druckraum (32) verbunden ist und schaftteilseitig in den Hohlschaft (21) mündet, axial verschiebbar angeordnet und durch den Hohlschaft (21) hindurch betätigbar ist.

2. Hydrodehnspannfutter nach Anspruch 1, **dadurch gekennzeichnet, dass** der Kolbenraum (40) axial im Bereich zwischen der Aufnahmeöffnung (31) und dem Hohlschaft (21) ausgebildet ist.

3. Hydrodehnspannfutter nach Anspruch 1 oder 2, **dadurch gekennzeichnet, dass** die Druckerzeugungseinrichtung einen den Kolben (42) verschiebenden Schraubkörper (41) umfasst, der in den Grundkörper (1) axial eingeschraubt und durch den Hohlschaft (21) hindurch betätigbar ist.

4. Hydrodehnspannfutter nach Anspruch 3, **dadurch gekennzeichnet, dass** der Schraubkörper (41) aus einer in den Grundkörper (1) eingeschraubten Hohlschraube (41a) oder einer mit dem Grundkörper (1) verschraubten Mutter (41b) gebildet ist.

5. Hydrodehnspannfutter nach einem der Ansprüche 1 bis 4, **dadurch gekennzeichnet, dass** der Kolben (42) druckraumseitig mit einem ringförmigen Dichtungskörper (43) versehen ist.

6. Hydrodehnspannfutter nach Anspruch 5, **dadurch gekennzeichnet, dass** der Dichtungskörper (43) radial gespreizt angeordnete Dichtlippen aufweist.

7. Hydrodehnspannfutter nach Anspruch 5 oder 6, **dadurch gekennzeichnet, dass** der Kolben (42) einen durch den Hohlschaft (21) hindurch betätigbaren Kolbenkörper und einen den Dichtungskörper (43) tragenden Dichtungsträger (44) umfasst.

8. Hydrodehnspannfutter nach einem der Ansprüche 1 bis 4, **dadurch gekennzeichnet, dass** das Kolbenspiel zwischen dem Kolben (42) und dem Grundkörper (1) durch ringförmige Dichtungskörper (43a, 43b) abgedichtet ist.

9. Hydrodehnspannfutter nach einem der vorhergehenden Ansprüche, **dadurch gekennzeichnet, dass** das Druckkanalsystem in Bezug auf die Dreh- oder Längsmittelachse (S) diametral gegenüberliegende Druckkanäle (33a, 33b; 33c, 33d) umfasst.

10. Hydrodehnspannfutter nach einem der vorhergehenden Ansprüche, **gekennzeichnet durch** ein die wenigstens eine Druckkammer (34a, 34b) mit einer Entlüftungseinrichtung (38a, 38b) verbindenden Entlüftungskanalsystem.

11. Hydrodehnspannfutter nach Anspruch 10, **dadurch gekennzeichnet, dass** das Entlüftungskanalsystem in Bezug auf die Dreh- oder Längsmittelachse (S) diametral gegenüberliegende Entlüftungskanäle (37a, 37b) umfasst.

12. Hydrodehnspannfutter nach einem der vorhergehenden Ansprüche, **gekennzeichnet durch** einen axial-zentrischen Durchlass (24) zwischen dem Hohlschaft (21) und der Aufnahmeöffnung (31).

13. Hydrodehnspannfutter nach Anspruch 12, **gekennzeichnet durch** eine in dem axial-zentrischen Durchlass (24) angeordnete Kühlschmiermittelzufuhreinrichtung (50) zur Versorgung eines in der Aufnahmeöffnung (31) aufgenommenen Schaftwerkzeugs (SW) mit einem Kühlschmiermittel.

14. Hydrodehnspannfutter nach einem der vorhergehenden Ansprüche, **dadurch gekennzeichnet, dass** der Hohlschaft (21) als ein Hohlschaftkegel ausgebildet ist.

15. Hydrodehnspannfutter nach einem der vorhergehenden Ansprüche, **dadurch gekennzeichnet, dass** der Spannteil (30) und der Schaftteil (20) aus getrennt gefertigten Körpern gebildet sind.

16. Hydrodehnspannfutter nach Anspruch 15, **dadurch gekennzeichnet, dass** der Spannteil (30) und der Schaftteil (20) form-, kraft- und/oder stoffschlüssig aneinandergefügt sind.

17. Hydrodehnspannfutter nach Anspruch 15 oder 16, **dadurch gekennzeichnet, dass** der Spannteil (30) und/oder Schaftteil (20) monolithisch ausgebildet sind/ist.

18. Hydrodehnspannfutter nach einem der Ansprüche 1 bis 14, **dadurch gekennzeichnet, dass** der Grundkörper (1) monolithisch ausgebildet ist.

## Claims

1. A hydraulic expansion chuck with a main body (1) which extends along a rotational or longitudinal center axis (S) and which has a clamping part (30) for receiving and clamping a shank tool (SW) and a shank part (20) with a hollow shank (21) for directly or indirectly coupling the hydraulic expansion chuck to a module of a modular tool system or to a machine spindle, wherein the clamping part (30) comprises a centric receiving opening (31) and, around the receiving opening (31), at least one pressure chamber (34) which can be subjected to fluid pressure and which is separated from the receiving opening (31) via an elastically resilient expansion wall and is connected to a pressure space (32) via a pressure duct system, and a pressure generating device which is arranged in the main body (1) and is intended for subjecting the pressure space (32) to pressure, **characterized in that**
the pressure generating device comprises an annular piston (42), which is arranged in an axially displaceable manner in the main body (1) in an annular piston space (40) which is formed concentrically with respect to the receiving opening (31) and which is connected to the pressure space (32) on the clamping part-side and opens into the hollow shank (21) on the shank-part side, and wherein the annular piston (42) can be actuated through the hollow shank (21).

2. The hydraulic expansion chuck according to Claim 1, **characterized in that** the piston space (40) is formed axially in the region between the receiving opening (31) and the hollow shank (21).

3. The hydraulic expansion chuck according to Claim 1 or 2, **characterized in that** the pressure generating device comprises a screw body (41) which displaces the piston (42) and which is screwed axially into the main body (1) and can be actuated through the hollow shank (21).

4. The hydraulic expansion chuck according to Claim 3, **characterized in that** the screw body (41) is formed from a hollow screw (41a) screwed into the main body (1) or from a nut (41b) screwed to the main body (1).

5. The hydraulic expansion chuck according to one of Claims 1 to 4, **characterized in that** the piston (42) is provided with an annular sealing body (43) on the pressure-space side.

6. The hydraulic expansion chuck according to Claim 5, **characterized in that** the sealing body (43) comprises sealing lips which are arranged in a radially spread manner.

7. The hydraulic expansion chuck according to Claim 5 or 6, **characterized in that** the piston (42) comprises a piston body which can be actuated through the hollow shank (21) and a seal carrier (44) which carries the sealing body (43).

8. The hydraulic expansion chuck according to one of Claims 1 to 4, **characterized in that** the piston play between the piston (42) and the main body (1) is sealed by annular sealing bodies (43a, 43b).

9. The hydraulic expansion chuck according to one of the preceding claims, **characterized in that** the pressure channel system comprises diametrically opposite pressure channels (33a, 33b; 33c, 33d) with respect to the rotational or longitudinal center axis (S).

10. The hydraulic expansion chuck according to one of the preceding claims, **characterized by** a venting channel system connecting the at least one pressure chamber (34a, 34b) to a venting device (38a, 38b).

11. The hydraulic expansion chuck according to Claim 10, **characterized in that** the venting channel system comprises diametrically opposite venting channels (37a, 37b) with respect to the rotational or longitudinal center axis (S).

12. The hydraulic expansion chuck according to one of the preceding claims, **characterized by** an axially-centric passage (24) between the hollow shank (21) and the receiving opening (31).

13. The hydraulic expansion chuck according to Claim 12, **characterized by** a cooling lubricant supply device (50) which is arranged in the axially-centric passage (24) and is intended for supplying a shank tool (SW) received in the receiving opening (31) with a cooling lubricant.

14. The hydraulic expansion chuck according to one of the preceding claims, **characterized in that** the hollow shank (21) is formed as a hollow shank cone.

15. The hydraulic expansion chuck according to one of the preceding claims, **characterized in that** the clamping part (30) and the shank part (20) are formed from separately produced bodies.

16. The hydraulic expansion chuck according to Claim 15, **characterized in that** the clamping part (30) and the shank part (20) are joined to each other in a form-fitting, force-fitting and/or integrally bonded manner.

17. The hydraulic expansion chuck according to Claim 15 or 16, **characterized in that** the clamping part (30) and/or the shank part (20) are/is formed monolithically.

18. Hydrodehnspannfutter nach einem der Ansprüche 1 bis 14, **dadurch gekennzeichnet, dass** der Grundkörper (1) monolithisch ausgebildet ist.

## Revendications

1. Mandrin hydraulique avec un corps de base (1) s'étendant le long d'un axe médian rotatif ou longitudinal (S) qui présente une partie de serrage (30) pour la réception et le serrage d'un outil à tige (SW) et une partie de tige (20) avec une tige creuse (21) pour le couplage direct ou indirect du mandrin hydraulique avec un module d'un système d'outil modulaire ou avec une broche de machine, dans lequel la partie de serrage (30) présente une ouverture de réception centrale (31) et autour de l'ouverture de réception (31) au moins une chambre de pression (34) pouvant être alimentée en pression fluidique qui est séparée de l'ouverture de réception (31) par le biais d'une paroi extensible flexible élastiquement et reliée à un espace de pression (32) par le biais d'un système de canal de pression, et un dispositif de génération de pression agencé dans le corps de base (1) pour l'alimentation en pression de l'espace de pression (32), **caractérisé en ce que**
le dispositif de génération de pression comprend un piston (42) annulaire qui est agencé de manière axialement mobile dans le corps de base (1) dans un espace de piston (40) annulaire configuré de manière concentrique à l'ouverture de réception (31) qui est relié côté partie de serrage à l'espace de pression (32) et débouche côté partie de tige dans la tige creuse (21) et peut être actionné à travers la tige creuse (21).

2. Mandrin hydraulique selon la revendication 1, **caractérisé en ce que** l'espace de piston (40) est configuré axialement dans la zone entre l'ouverture de réception (31) et la tige creuse (21).

3. Mandrin hydraulique selon la revendication 1 ou 2, **caractérisé en ce que** le dispositif de génération de pression comprend un corps de vis (41) déplaçant le piston (42) qui est vissé axialement dans le corps de base (1) et peut être actionné à travers la tige creuse (21).

4. Mandrin hydraulique selon la revendication 3, **caractérisé en ce que** le corps de vis (41) est formé d'une vis creuse (41a) vissée dans le corps de base (1) ou d'un écrou (41b) vissé au corps de base (1).

5. Mandrin hydraulique selon l'une quelconque des revendications 1 à 4, **caractérisé en ce que** le piston (42) est pourvu côté espace de pression d'un corps de garniture (43) annulaire.

6. Mandrin hydraulique selon la revendication 5, **caractérisé en ce que** le corps de garniture (43) présente des lèvres étanches agencées radialement écartées.

7. Mandrin hydraulique selon la revendication 5 ou 6, **caractérisé en ce que** le piston (42) comprend un corps de piston actionnable à travers la tige creuse (21) et un support de garniture (44) portant le corps de garniture (43).

8. Mandrin hydraulique selon l'une quelconque des revendications 1 à 4, **caractérisé en ce que** le jeu de piston est rendu étanche entre le piston (42) et le corps de base (1) par des corps de garniture (43a, 43b) annulaires.

9. Mandrin hydraulique selon l'une quelconque des revendications précédentes, **caractérisé en ce que** le système de canal de pression comprend des canaux de pression (33a, 33b ; 33c, 33d) diamétralement opposés en ce qui concerne l'axe médian rotatif ou longitudinal (S).

10. Mandrin hydraulique selon l'une quelconque des revendications précédentes, **caractérisé par** un système de canal de ventilation reliant l'au moins une chambre de pression (34a, 34b) à un dispositif de ventilation (38a, 38b).

11. Mandrin hydraulique selon la revendication 10, **caractérisé en ce que** le système de canal de ventilation comprend des canaux de ventilation (37a, 37b) diamétralement opposés en ce qui concerne l'axe médian rotatif ou longitudinal (S).

12. Mandrin hydraulique selon l'une quelconque des revendications précédentes, **caractérisé par** un passage (24) central axialement entre la tige creuse (21) et l'ouverture de réception (31).

13. Mandrin hydraulique selon la revendication 12, **caractérisé par** un dispositif d'amenée de lubrifiant de refroidissement (50) agencé dans le passage (24) axialement central pour l'alimentation d'un outil à tige (SW) reçu dans l'ouverture de réception (31) en un lubrifiant de refroidissement.

14. Mandrin hydraulique selon l'une quelconque des revendications précédentes, **caractérisé en ce que** la tige creuse (21) est configurée comme un cône de tige creuse.

15. Mandrin hydraulique selon l'une quelconque des revendications précédentes, **caractérisé en ce que** la partie de serrage (30) et la partie de tige (20) sont formées de corps fabriqués séparément.

16. Mandrin hydraulique selon la revendication 15, **caractérisé en ce que** la partie de serrage (30) et la partie de tige (20) sont assemblées par complémentarité de formes, à force et/ou par matière l'une avec l'autre.

17. Mandrin hydraulique selon la revendication 15 ou 16, **caractérisé en ce que** la partie de serrage (30) et/ou la partie de tige (20) sont configurées de manière monolithique.

18. Mandrin hydraulique selon l'une quelconque des revendications 1 à 14, **caractérisé en ce que** le corps de base (1) est configuré de manière monolithique.
